(19) **Europäisches Patentamt / European Patent Office / Office européen des brevets**

(11) **EP 1 546 426 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(51) Int Cl.:
*C22C 38/00* (2006.01)    *C22C 38/12* (2006.01)
*C21D 7/13* (2006.01)

(21) Anmeldenummer: **03747975.5**

(22) Anmeldetag: **05.09.2003**

(86) Internationale Anmeldenummer:
**PCT/EP2003/009893**

(87) Internationale Veröffentlichungsnummer:
**WO 2004/031428 (15.04.2004 Gazette 2004/16)**

(54) **STAHLZUSAMMENSETZUNG UND DARAUS HERGESTELLTE GESENKSCHMIEDETEILE**

STEEL COMPOSITION AND PARTS FORGED BY A FORGING DIE

COMPOSITION D'ACIER ET PIECES MATRICEES FABRIQUEES A PARTIR DE CETTE COMPOSITION

(84) Benannte Vertragsstaaten:
**AT BE BG CH CY CZ DE DK EE ES FI FR GB GR HU IE IT LI LU MC NL PT RO SE SI SK TR**

(30) Priorität: **27.09.2002 EP 02021820**

(43) Veröffentlichungstag der Anmeldung:
**29.06.2005 Patentblatt 2005/26**

(73) Patentinhaber: **CDP Bharat Forge GmbH**
**58256 Ennepetal (DE)**

(72) Erfinder:
• **ARNDT, Johannes**
  **40764 Langenfeld (DE)**
• **MROS, Thomas**
  **58256 Ennepetal (DE)**

(74) Vertreter: **Siegert, Georg**
**Hoffmann - Eitle**
**Patent- und Rechtsanwälte**
**Arabellastrasse 4**
**81925 München (DE)**

(56) Entgegenhaltungen:
**EP-A- 0 648 853**      **EP-A- 1 051 531**

• **PATENT ABSTRACTS OF JAPAN vol. 1995, no. 09, 31. Oktober 1995 (1995-10-31) -& JP 07 157824 A (NIPPON STEEL CORP), 20. Juni 1995 (1995-06-20)**
• **PATENT ABSTRACTS OF JAPAN vol. 1997, no. 11, 28. November 1997 (1997-11-28) -& JP 09 194999 A (SUMITOMO METAL IND LTD), 29. Juli 1997 (1997-07-29)**
• **PATENT ABSTRACTS OF JAPAN vol. 1995, no. 07, 31. August 1995 (1995-08-31) -& JP 07 102340 A (NIPPON STEEL CORP), 18. April 1995 (1995-04-18)**
• **PATENT ABSTRACTS OF JAPAN vol. 017, no. 093 (C-1029), 24. Februar 1993 (1993-02-24) -& JP 04 285118 A (NIPPON STEEL CORP), 9. Oktober 1992 (1992-10-09)**
• **PATENT ABSTRACTS OF JAPAN vol. 1996, no. 07, 31. Juli 1996 (1996-07-31) -& JP 08 060236 A (KOBE STEEL LTD;MAZDA MOTOR CORP), 5. März 1996 (1996-03-05)**

**Beschreibung**

Die vorliegende Erfindung bezieht sich auf eine neue Stahlzusammensetzung, daraus hergestellte Gesenkschmiedeteile, Verfahren zur Herstellung der Gesenkschmiedeteile und ihre Verwendung als Fahrwerksteile für Personenkraftwagen und Nutzfahrzeuge.

Geschmiedete Fahrwerkskomponenten für Kraftfahrzeuge sind sicherheitsrelevante Teile, für die neben einer hohen Festigkeit auch eine hohe Zähigkeit (charakterisiert z.B. durch die Kennwerte Bruchdehnung, Brucheinschnürung, Kerbschlagzähigkeit) gefordert wird. Deshalb wurden bis in die 1980er Jahre diese Komponenten fast ausnahmslos nach der Warmformgebung einer aufwendigen abschließenden Wärmebehandlung (Vergüten) unterzogen. In den 80er Jahren wurden dann die "Ausscheidungshärtenden Ferritisch-Perlitischen Stähle" (AFP-Stähle) entwickelt, bei denen die Festigkeitskennwerte ohne abschließende Wärmebehandlung durch Karbonitrid-Ausscheidungen in der ferritisch-perlitischen Stahlmatrix erreicht werden. Der Einsatz dieser Stähle ist heute bei geschmiedeten Stahlkomponenten für PKW-Fahrwerksteile die Regel. Bei der Verarbeitung dieser Stähle ist wichtig, die Temperaturführung so einzustellen, dass die Umwandlung des Stahls und die Ausscheidung der Karbonitride optimal aufeinander abgestimmt sind.

Bei Nutzfahrzeugen (NFZ) werden sicherheitsrelevante Fahrwerkskomponenten wie z.B. Achsschenkel bis heute nahezu ausschließlich aus Vergütungsstählen hergestellt, d.h. mit der aufwendigen abschließenden Wärmebehandlung. Dafür können folgende Gründe genannt werden:

Eine höhere Belastung der NFZ-Teile und deshalb eine höhere spezifizierte Festigkeit bei gleichzeitig geforderter höherer Zähigkeit des Werkstoffes. Insbesondere wird häufig die Erfüllung von Spezifikationen verlangt, die zu garantierende Kerbschlagzähigkeitswerte enthalten. Dies ist mit den heute auf dem Markt befindlichen AFP-Stählen entsprechender Festigkeit nicht möglich.

Aufgrund der wesentlich höheren Masse der NFZ-Teile kühlen diese deutlich anders von der Warmformgebungstemperatur ab als PKW-Teile. Da die Temperaturführung entscheidenden Einfluß auf die erreichbaren mechanischen Kennwerte hat (s.o.), können mit den heute verfügbaren AFP-Stählen an NFZ-Teilen selbst die bei PKW-Teilen üblichen niedrigeren mechanischen Kennwerte meist nicht realisiert werden.

Eine in den vergangenen Jahren verfolgte werkstofftechnische Entwicklungsrichtung im NFZ-Fahrwerksbereich hatte das Ziel, durch eine Direktvergütung niedrig gekohlter Stähle aus der Umformwärme ohne nachfolgendes Anlassen eine untere bainitische Gefügestruktur einzustellen und so die teure Schlussvergütung einzusparen (s. DE-PS 36 28 264 A1, DE-PS 41 24 704 A1, US-PS 5,660,648). Problematisch ist bei dieser Technologie jedoch das niedrige Streckgrenzenverhältnis, die relativ geringe Dauerfestigkeit und die Inhomogenität der Eigenschaften sowie eine verstärkte Verzugsneigung. Sie hat sich im Bereich der sicherheitsrelevanten Fahrwerksteile für NFZ nicht durchgesetzt.

Auf dem Gebiet der AFP-Stähle mit ferritisch-perlitischer Struktur wurden einige Entwicklungsarbeiten mit dem Ziel einer Verbesserung der Zähigkeit durchgeführt, um diese Stahlgruppe auch im NFZ-Fahrwerksbereich einsetzen zu können (s. Hertogs, J.A.; Ravenshorst, H; Richter, K.E.; Wolff, J.: Neuere Anwendungen der ausscheidungshärtenden ferritisch-perlitischen Stähle für geschmiedete Bauteile im Motor und Fahrwerk. Konferenz "Stahl im Automobilbau", Würzburg, 24.-26.9.1990; und Huchtemann, B.; Schüler, V.: Entwicklungsstand der ausscheidungshärtenden ferritisch-perlitischen (AFP-) Stähle mit Vanadium. Stahl 2/1992, S.36-41). Dabei wurden z.B. durch eine Absenkung der Umformtemperatur leichte Verbesserungen erzielt. Da aber das Formfüllungsverhalten bei abgesenkten Umformtemperaturen deutlich schlechter ist und darüber hinaus der Werkzeugverschleiß drastisch ansteigt, war diese Variante für einen betrieblichen Einsatz nicht geeignet.

Eine weitere Variante setzte auf Titan-Legierungszusätze zur Kornfeinung und daraus folgend zur Zähigkeitsverbesserung. Das Problem dabei war, dass die Kornfeinung durch Titannitride erreicht wurde. Dadurch wurde der zur Festigkeitssteigerung benötigte Stickstoff abgebunden. Die Folge war eine im Vergleich zu Vergütungsstählen weit unterlegene Festigkeit.

Ferner beschreibt JP-A-07157824 eine Stahlzusammensetzung, die 0,15 bis 0,50 Gew.% C; 0,005 bis 2,00 Gew.% Si; 0,40 bis 2,00 Gew.% Mn; 0,01 bis 0,10 Gew.% S; 0,0005 bis 0,05 Gew.% A1; 0,003 bis 0,05 Gew.% Ti; 0,0020 bis 0,0200 Gew.% N und 0,20 bis 0,70 Gew.% V enthält. Außerdem können auch 0,02 bis 1,50 Gew.% Cr und/ oder 0,02 bis 1,00 Gew.% Mo; 0,001 bis 0,2 Gew.% Nb oder 0,05 bis 0,30 Gew.% Pb und/oder 0,0005 bis 0,01 Gew. % Ca enthalten sein. Die Stahlzusammensetzung wird bei einer Temperatur von 750 bis 900°C geschmiedet und dann abgekühlt. Eine gute Bearbeitbarkeit kann erzielt werden, indem eine Feinstruktur, die ≥ 90 % Ferrit und Perlit umfasst, gebildet wird. Ferner wird das Ferrit durch V-Carbid gefestigt, indem eine abschließende Temperaturbehandlung bei 200 bis 700 °C durchgeführt wird.

Die der Erfindung zugrundeliegende Aufgabe besteht daher darin, eine Stahlzusammensetzung für AFP-Stähle zur Herstellung von Gesenkschmiedeteilen bereitzustellen, die ohne eine zusätzliche Wärmebehandlung eine hohe Festigkeit bei gleichzeitig hoher Zähigkeit in diesen Bauteilen aufweist, so dass sie als Fahrwerksteile auch für NFZ einsetzbar sind.

Die Aufgabe wird gelöst durch eine Stahlzusammensetzung, die die folgenden Bestandteile in Gewichtsprozent umfasst:

| | |
|---|---|
| C : | 0,12-0,45 |
| Si : | 0,10-1,00 |
| Mn : | 0,50-1,95 |
| S : | 0,005-0,060 |
| Al : | 0,004-0,050 |
| Ti : | 0,004-0,050 |
| Cr : | 0-0,60 |
| Ni : | 0-0,60 |
| Co : | 0-0,60 |
| W : | 0-0,60 |
| B : | 0-0,01 |
| Mo : | 0-0,60 |
| Cu : | 0-0,60 |
| Nb : | 0-0,050 |
| V : | 0,10-0,40 |
| N : | 0,015-0,040 |
| Rest : | Fe und unvermeidbare Verunreinigungen |

mit den Maßgaben:

1) Gew%V x Gew%N =0,0021 bis 0,0120

2) 1,6xGew%S + 1,5xGew%Al + 2,4xGew%Nb + 1,2xGew%Ti = 0,040 bis 0,080

3) 1,2xGew%Mn + 1,4xGew%Cr + 1,0xGew%Ni + 1,1xGew%Cu + 1, 8xGew%Mo = 1,00 bis 3,50

Ein zentraler Punkt der Erfindung ist, daß die notwendige Zähigkeitsverbesserung durch eine Absenkung des Kohlenstoffgehaltes im Stahl erreicht wird, verglichen mit den heute auf einer gegebenen Festigkeitsstufe üblichen Konzentrationen. Der nach dem Stand der Technik durch diese Maßnahme zu erwartende Festigkeitsverlust wird erfindungsgemäß durch die spezielle Kombination der übrigen Bestandteile nicht nur vollständig eliminiert sondern sogar überkompensiert. Wesentliche Faktoren, die für die hohe Festigkeit trotz Absenkung des Kohlenstoffgehaltes verantwortlich sind, sind insbesondere:

- Ein Vanadium-Gehalt von 0,10 Gew% bis 0,40 Gew% und ein Stickstoffgehalt von 0,015 Gew% bis 0,040 Gew%, wobei erfindungsgemäß folgende Bedingung einzuhalten ist:

```
Gew%V x Gew%N =0,0021 bis 0,0120;
```

bevorzugt

```
Gew%V x Gew%N =0,0028 bis 0,0060.
```

- Ein abgestimmtes Verhältnis der Mikrolegierungselemente Ti, Al und Nb mit dem Schwefel, wobei erfindungsgemäß folgende Bedingung einzuhalten ist:

```
1,6xGew%S + 1,5xGew%Al + 2,4xGew%Nb + 1,2xGew%Ti =
0,040 bis 0,080.
```

- Ein abgestimmtes Verhältnis der Mischkristallverfestigenden Legierungselemente, wobei erfindungsgemäß folgende Bedingung einzuhalten ist:

$$1,2 \times Gew\%Mn + 1,4 \times Gew\%Cr + 1,0 \times Gew\%Ni + 1,1 \times Gew\%Cu + 1,8 \times Gew\%Mo = 1,00 \text{ bis } 3,50;$$

bevorzugt

$$1,2 \times Gew\%Mn + 1,4 \times Gew\%Cr + 1,0 \times Gew\%Ni + 1,1 \times Gew\%Cu + 1,8 \times Gew\%Mo = 1,65 \text{ bis } 2,80.$$

Die oben beschriebene Stahlzusammensetzung eignet sich hervorragend zur Herstellung von Gesenkschmiedeteilen, die als Fahrwerksteile, wie z.B. Achsschenkel, für Personenkraftwagen oder Nutzfahrzeuge verwendet werden können.

Die erfindungsgemäßen Gesenkschmiedeteile werden über ein Verfahren hergestellt, das die folgenden Schritte umfasst:

(a) Erwärmen des Vormaterials aus einer Stahlzusammensetzung wie oben definiert auf eine Temperatur von 1000 bis 1300 °C;

(b) Umformen des Vormaterials aus Schritt (a) durch Verschmieden;

(c) Abkühlen des in Schritt (b) erhaltenen Gesenkschmiedeteiles auf Raumtemperatur, wobei in dem Temperaturbereich bis 580 °C die Kühlrate mindestens 0,2 °C/s beträgt.

Das erfindungsgemäße Herstellungsverfahren wird im folgenden in bezug auf einzelne Herstellungsschritte näher beschrieben.

Zunächst wird in einem Schritt (a) ein aus der erfindungsgemäßen Stahlzusammensetzung hergestelltes Vormaterial in einer handelsüblichen Geometrie, z.B. Langstahl, auf 1000 bis 1300 °C erwärmt. Das Material wird in diesem Temperaturbereich mindestens solange gehalten, bis sich ein homogenes austenitisches Gefüge gebildet hat. Gewöhnlich beträgt die Dauer 5 bis 10 min. Wenn das Gesenkschmiedeteil als Fahrwerksteil für Nutzfahrzeuge verwendet werden soll, ist es bevorzugt, dass das Vormaterial eine Masse von mehr als 15 kg aufweist. Für Gesenkschmiedeteile, die als Fahrwerksteile in Personenkraftwagen eingesetzt werden, wird gewöhnlich ein Vormaterial mit einer Masse zwischen 5 und 14 kg verwendet.

In Schritt (b) wird das Vormaterial in einem üblichen Umformprozess mit einem oder mehreren Umformschritten durch Verschmieden in die gewünschte Form umgeformt. Vorzugsweise erfolgt der Umformprozess in Schritt (b) unmittelbar nach der Erwärmung des Vormaterials in Schritt (a), so dass das Vormaterial während seiner Umformung eine Temperatur im Bereich von 950 und 1250 °C aufweist.

In Schritt (c) wird das in Schritt (b) erhaltene Gesenkschmiedeteil auf Raumtemperatur abgekühlt. Dabei beträgt die Kühlrate bis zu einer Temperatur von 580 °C mindestens 0,2 °C/s.

Durch die Kühlrate lassen sich die mechanischen Eigenschaften des Gesenkschmiedeteils je nach Anforderung definiert einstellen.

Die Kühlrate bei der Abkühlung der Gesenkschmiedeteile aus dem erfindungsgemäßen Stahl auf 580 °C wird vorzugsweise im Bereich von 0,2 bis 6 °C/s gewählt. Noch bevorzugter ist eine Kühlrate im Bereich von 0,2 bis 0,6 °C/s. Dies entspricht der Abkühlung von schweren NFZ-Teilen an ruhender Luft. Dies hat den Vorteil, dass das NFZ-Gesenkschmiedeteil aus Schritt (b) lediglich durch Stehen lassen an der Luft abgekühlt werden kann.

Im Hinblick auf die Erzielung von besonders hohen Festigkeits- und Zähigkeitswerten, wie sie bei Fahrwerksteilen für Nutzfahrzeuge gefordert sind, ist eine Kühlrate bis 580 °C von 0,7 °C/s bis 6 °C/s besonders bevorzugt. Die Einstellung einer Kühlrate in diesem Bereich erfolgt für NFZ-Teile mit einer Masse von über 15kg z.B. mittels einer Wasserkühlstrecke, die hinsichtlich der Anzahl der aktiven Wasserdüsen und deren Ausrichtung sowie hinsichtlich des Druckes und der Durchflussmenge flexibel ist.

Für die leichteren PKW-Teile aus dem erfindungsgemäßen Stahl gelten die gleichen Zusammenhänge zwischen Kühlrate und Eigenschaften. Aufgrund der geringeren Masse von PKW-Teilen ist zur Einstellung der Kühlrate im Unterschied zu den NFZ-Teilen nur dann eine beschleunigte Kühlung erforderlich, wenn die Kühlrate in der oberen Hälfte des angegebenen Bereiches liegen soll. Kühlraten von etwa 0,7 bis etwa 2,0 °C/s stellen sich bereits bei Kühlung an ruhender Luft automatisch ein.

Die Kühlrate unterhalb von 580 °C kann beliebig gewählt werden und hat im Hinblick auf die Festigkeit und Zähigkeit des erhaltenen Gesenkschmiedeteils keinen Einfluss.

Das erfindungsgemäß hergestellte Gesenkschmiedeteil weist nach dem Abkühlen von der Umformwärme die folgenden mechanischen Eigenschaften auf:

- Zugversuch nach DIN EN 10002 bei Raumtemperatur:

> Streckgrenze: $Rp_{0.2} \geq 540$ MPa, bevorzugt 540-850 MPa
> Zugfestigkeit: $Rm \geq 700$ MPa, bevorzugt 700-1100 MPa
> Bruchdehnung: $A5 \geq 10$ %, bevorzugt 10-16 %
> Brucheinschnürung: $Z \geq 20$%, bevorzugt 20-50 %

- Kerbschlagbiegeversuch an ISO-U-Proben gemäß DIN EN 50115:

> Kerbschlagarbeit: $Av(RT) \geq 30$ J, bevorzugt 30-70 J
> Kerbschlagarbeit: $Av(-20°C) \geq 10$ J, bevorzugt 10-25 J

Ein Gesenkschmiedeteil, das nach dem besonders bevorzugten Verfahren hergestellt ist, kann, abhängig von der gewählten Kühlrate, die folgenden mechanischen Kennwerte aufweisen.

> $Rp_{0.2}$ = 580-680 MPa
> Rm = 800-900 MPa
> A5 = 14-16 %
> Z = 35-50 %
> Av(RT) = 30-40 J
> Av(-20°C) = 10-20 J.

Ebenso sind nach dem besonders bevorzugten Verfahren Gesenkschmiedeteile mit den folgenden Eigenschaften herstellbar:

> $Rp_{0.2}$ = 800-850 MPa
> Rm = 1050-1100 MPa
> A5 = 10-12 %
> Z = 20-30 %

Durch die obigen Eigenschaften wird deutlich, dass die erfindungsgemäßen Gesenkschmiedeteile nach Abkühlen von der Umformwärme im Vergleich zum Stand der Technik eine hohe Festigkeit bei gleichzeitig hoher Zähigkeit aufweisen. Daher sind die erfindungsgemäßen Gesenkschmiedeteile als sicherheitsrelevante Fahrwerkskomponenten, wie z.B. Achsschenkel, für Personenkraftwagen und sogar für Nutzfahrzeuge einsetzbar.

Die Erfindung wird anhand der folgenden Beispiele näher erläutert.

Beispiel 1 (nicht erfindungsgemäß)

Verwendung eines Stahls mit folgender chemischer Zusammensetzung:

| | |
|---|---|
| C: | 0, 14 Gew% |
| Si: | 0,40 Gew% |
| Mn: | 1,00 Gew% |
| S: | 0,020 Gew% |
| Al: | 0,035 Gew% |
| Ti: | 0,015 Gew% |
| Nb: | 0,005 Gew% |
| Cr: | 0,45 Gew% |
| Ni: | 0,10 Gew% |

(fortgesetzt)

| | |
|---|---|
| Cu: | 0,15 Gew% |
| Mo: | 0,10 Gew% |
| V: | 0,25 Gew% |
| N: | 0,030 Gew% |

Induktive Erwärmung des Stabstahls mit einer Querschnitt von 140mm$^2$ auf 1250 °C und halten des Stahls auf dieser Temperatur für 10 Minuten.

Verschmieden des Vierkantmaterials zu einem Achsschenkel mit 30 kg Masse in einer Vorstauchoperation, 2 Fertigformoperationen und einer Abgratoperation. Die Temperatur des Achsschenkels am Ende des Umformprozesses beträgt 1100 °C.

Abkühlen des Achsschenkels von 1100°C auf 580°C auf einer Kühlstrecke mit einer Kühlrate von 3,9°C/s.

Der Achsschenkel weist die folgenden gemäß DIN EN 10002 bei Raumtemperatur und DIN EN 50115 bestimmten mechanischen Eigenschaften auf:

Rp$_{0.2}$=580 MPa,
Rm = 750 MPa
A5=16%
Z= 55%
Av(Raumtemperatur)=50 J
Av(-20°C)=20 J

Beispiel 2 (nicht erfindungsgemäß)

Verwendung eines Stahls mit folgender chemischer Zusammensetzung:

| | |
|---|---|
| C: | 0,37 Gew% |
| Si: | 0,40 Gew% |
| Mn: | 0,90 Gew% |
| S: | 0,035 Gew% |
| Al: | 0,015 Gew% |
| Ti: | 0,035 Gew% |
| Nb: | 0,010 Gew% |
| Cr: | 0,10 Gew% |
| Ni: | 0,50 Gew% |
| Cu: | 0,20 Gew% |
| Mo: | 0,10 Gew% |
| V: | 0,28 Gew% |
| N: | 0,032 Gew% |

Induktive Erwärmung des Stabstahls mit einer Querschnitt von 140mm$^2$ auf 1250 °C und halten des Stahls auf dieser Temperatur für 10 Minuten.

Verschmieden des Vierkantmaterials zu einem Achsschenkel mit 38 kg Masse in einer Vorstauchoperation, 2 Fertigformoperationen und einer Abgratoperation. Die Temperatur des Achsschenkels am Ende des Umformprozesses beträgt 1150 °C.

Abkühlen des Achsschenkels von 1150 °C auf 580 °C an ruhender Luft mit einer Kühlrate von 0,5 °C/s.

Der Achsschenkel weist die folgenden gemäß DIN EN 10002 bei Raumtemperatur bestimmten mechanischen Eigenschaften auf:

Rp$_{0.2}$ = 700 MPa
Rm = 1000 MPa
A5 = 12 %
Z = 30 %

Beispiel 3 (nicht erfindungsgemäß)

Verwendung eines Stahls gemäß Beispiel 2

Erwärmung und Umformung des 38kg schweren Achsschenkels gemäß Beispiel 2.
Abkühlen des Achsschenkels von 1150°C auf 580°C auf einer Kühlstrecke mit einer Kühlrate von 1,8°C/s.
Der Achsschenkel weist die folgenden gemäß DIN EN 10002 bei Raumtemperatur bestimmten mechanischen Eigenschaften auf:

$Rp_{0.2}$ = 820 MPa
Rm = 1080 MPa
A5 = 10 %
Z = 20 %

**Patentansprüche**

1.   Stahlzusammensetzung, umfassend die folgenden Bestandteile in Gewichtsprozent:

| | |
|---|---|
| C : | 0,12-0,45 |
| Si : | 0,10-1,00 |
| Mn : | 0,50-1,95 |
| S : | 0,005-0,060 |
| Al : | 0,004-0,050 |
| Ti : | 0,004-0,050 |
| Cr : | 0-0,60 |
| Ni : | 0-0,60 |
| Co : | 0-0,60 |
| W : | 0-0,60 |
| B : | 0-0,01 |
| Mo : | 0-0,60 |
| Cu : | 0-0,60 |
| Nb : | 0-0,050 |
| V : | 0,10-0,40 |
| N : | 0,015-0,040 |
| Rest : | Fe und unvermeidbare Verunreinigungen |

mit den Maßgaben:

1) Gew%V x Gew%N = 0,0021 bis 0,0120
2) 1,6xGew%S + 1,5xGew%Al + 2,4xGew%Nb + 1,2xGew%Ti = 0,040 bis 0,080
3) 1,2xGew%Mn + 1,4xGew%Cr + 1,0xGew%Ni + 1,1xGew%Cu + 1,8xGew%Mo = 1,00 bis 3,50.

2.   Gesenkschmiedeteil aus Stahl, wobei der Stahl eine Zusammensetzung gemäß Anspruch 1 besitzt.

3.   Verfahren zur Herstellung eines Gesenkschmiedeteils gemäß Anspruch 2, umfassend die Schritte

(a) Erwärmen des Vormaterials aus einer Stahlzusammensetzung gemäß Anspruch 1 auf eine Temperatur von 1000 bis 1300 °C;
(b) Umformen des Vormaterials aus Schritt (a) durch Verschmieden;
(c) Abkühlen des in Schritt (b) erhaltenen Gesenkschmiedeteiles auf Raumtemperatur, wobei in dem Temperaturbereich bis 580 °C die Kühlrate mindestens 0,2 °C/s beträgt.

4.   Verfahren gemäß Anspruch 3, wobei das Abkühlen in Schritt (c) bis zu einer Temperatur von 580 °C mit einer Kühlrate von 0,2 °C/s bis 0,6 °C/s erfolgt.

5. Verfahren gemäß Anspruch 3, wobei das Abkühlen in Schritt (c) bis zu einer Temperatur von 580 °C mit einer Kühlrate von 0,7 °C/s bis 6 °C/s erfolgt.

6. Verwendung des Gesenkschmiedeteils, erhältlich durch das Verfahren gemäß einem der Ansprüche 3 bis 5, als Fahrwerksteil für Nutzfahrzeuge.

7. Verwendung des Gesenkschmiedeteils, erhältlich durch das Verfahren gemäß Anspruch 5, als Fahrwerksteil für PKW.

**Claims**

1. Steel composition comprising the following constituents in percentage by weight:

| | |
|---|---|
| C : | 0.12 - 0.45 |
| Si : | 0.10 - 1.00 |
| Mn : | 0.50 - 1.95 |
| S : | 0.005-0.060 |
| Al : | 0.004-0.050 |
| Ti : | 0.004-0.050 |
| Cr : | 0 - 0.60 |
| Ni : | 0 - 0.60 |
| Co : | 0 - 0.60 |
| W : | 0 - 0.60 |
| B : | 0 - 0.01 |
| Mo : | 0 - 0.60 |
| Cu : | 0 - 0.60 |
| Nb : | 0 - 0.50 |
| V : | 0.10 - 0.40 |
| N : | 0.015-0.040 |
| Remainder: | Fe and unavoidable impurities |

subject to the conditions:

1) > Wt.% V x Wt.% N = 0.0021 to 0.0120
2) 1.6xWt.% S + 1.5xWt.% Al + 2.4xWt.% Nb + 1.2xWt.% Ti = 0.040 to 0.080
3) > 1.2xWt.% Mn + 1.4xWt.% Cr + 1.0xWt.% Ni + 1.1xWt.% Cu + 1.8xWt.% Mo = 1.00 to 3.50.

2. Drop forged part composed of steel, wherein the steel has a composition according to claim 1.

3. Process for manufacturing a drop forged part according to claim 2 comprising the steps:

(a) heating the precursor material of a steel composition according to claim 1 to a temperature of 1,000 to 1,300 °C;
(b) shaping the precursor material from step (a) by forging;
(c) cooling the drop forged part obtained in step (b) to room temperature, wherein in the temperature range to 580 °C the cooling rate is at least 0.2 °C/s.

4. Process according to claim 3, wherein the cooling in step (c) to a temperature of 580 °C ensues at a cooling rate of 0.2 °C/s to 0.6 °C/s.

5. Process according to claim 3, wherein the cooling in step (c) to a temperature of 580 °C ensues at a cooling rate of 0.7 °C/s to 6 °C/s.

6. Use of the drop forged part obtainable by the process according to any of claims 3 to 5 as a chassis part for utility vehicles.

7. Use of the drop forged part obtainable by the process according to claim 5 as a chassis part for private cars.

**Revendications**

1. Composition d'acier, comprenant les constituants suivants en pour cent en poids :

| | |
|---|---|
| C : | 0,12-0,45 |
| Si : | 0,10-1,00 |
| Mn : | 0,50-1,95 |
| S : | 0,005-0,060 |
| Al : | 0,004-0,050 |
| Ti : | 0,004-0,050 |
| Cr : | 0-0,60 |
| Ni : | 0-0,60 |
| Co : | 0-0,60 |
| W : | 0-0,60 |
| B : | 0-0,01 |
| Mo : | 0-0,60 |
| Cu : | 0-0,60 |
| Nb : | 0-0,050 |
| V : | 0,10-0,40 |
| N : | 0,015-0,040 |
| Reste : | Fe et les impuretés inévitables |

sous réserve que :

1) V en % en poids x N en % en poids = 0,0021 à 0,0120
2) 1,6xS en % en poids + 1,5xAl en % en poids + 2,4xNb en % en poids + 1,2xTi en % en poids = 0,040 à 0,080
3) 1,2xMn en % en poids + 1,4xCr en % en poids + 1,0 x Ni en % en poids + 1,1xCu en % en poids + 1,8xMo en % en poids = 1,00 à 3,50.

2. Pièce d'acier matricée, dans laquelle l'acier possède une composition selon la revendication 1.

3. Procédé de fabrication d'une pièce matricée selon la revendication 2, comprenant les étapes consistant à :

(a) chauffer la matière brute d'une composition d'acier selon la revendication 1 jusqu'à une température de 1000 à 1300 °C ;
(b) mettre en forme la matière brute de l'étape (a) par matriçage ;
(c) refroidir la pièce matricée obtenue à l'étape (b) jusqu'à température ambiante, la vitesse de refroidissement s'élevant à au moins 0,2 °C/s dans la gamme de température jusqu'à 580 °C.

4. Procédé selon la revendication 3, dans lequel on effectue le refroidissement à l'étape (c) jusqu'à une température de 580 °C avec une vitesse de refroidissement de 0,2 °C/s à 0,6 °C/s.

5. Procédé selon la revendication 3, dans lequel on effectue le refroidissement à l'étape (c) jusqu'à une température de 580 °C avec une vitesse de refroidissement de 0,7 °C/s à 6 °C/s.

6. Utilisation de la pièce matricée, pouvant être obtenue par le procédé selon l'une des revendications 3 à 5, comme pièce d'un mécanisme de roulement pour des véhicules utilitaires.

7. Utilisation de la pièce matricée, pouvant être obtenue par le procédé selon la revendication 5, comme pièce d'un mécanisme de roulement pour des voitures particulières.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3628264 A1
- DE 4124704 A1
- US 5660648 A
- JP 07157824 A

**In der Beschreibung aufgeführte Nicht-Patentliteratur**

- **HERTOGS, J.A. ; RAVENSHORST, H ; RICHTER, K.E. ; WOLFF, J.** Neuere Anwendungen der ausscheidungshärtenden ferritisch-perlitischen Stähle für geschmiedete Bauteile im Motor und Fahrwerk. Konferenz. *Stahl im Automobilbau,* 24. September 1990

- **HUCHTEMANN, B. ; SCHÜLER, V.** Entwicklungsstand der ausscheidungshärtenden ferritisch-perlitischen (AFP-) Stähle mit Vanadium. *Stahl,* Februar 1992, 36-41